(19) Europäisches Patentamt
European Patent Office
Office européen des brevets

(11) Publication number : 0 656 409 A2

# (12) EUROPEAN PATENT APPLICATION

(21) Application number : 94308788.2

(22) Date of filing : 29.11.94

(51) Int. Cl.[6] : **C09D 183/04,** C09D 157/06, C09D 143/04

(30) Priority : 30.11.93 JP 323451/93

(43) Date of publication of application : 07.06.95 Bulletin 95/23

(84) Designated Contracting States : DE FR GB

(71) Applicant : **Shin-Etsu Chemical Co., Ltd.**
**6-1, Otemachi 2-chome**
**Chiyoda-ku Tokyo 100 (JP)**

(72) Inventor : **Takadara, Mitsuhiro, c/o**
**Silicone-Electronics**
**Shin-Etsu Chemical Co, Ltd,**
**1-10, Oaza Hitomi**
**Matsuida-machi, Usui-gun, Gunma-ken (JP)**
Inventor : **Takahashi, Tadashi, c/o**
**Silicone-Electronics**
**Shin-Etsu Chemical Co, Ltd,**
**1-10, Oaza Hitomi**
**Matsuida-machi, Usui-gun, Gunma-ken (JP)**

(74) Representative : **Stoner, Gerard Patrick et al**
**MEWBURN ELLIS**
**York House**
**23 Kingsway**
**London WC2B 6HP (GB)**

(54) **Coating compositions.**

(57) A coating composition comprising (A) a vinyl copolymer containing a hydroxyl group and a hydrolyzable silyl group, (B) an organopolysiloxane of the formula : $R^1_aX_bSiO_{(4-a-b)/2}$ wherein $R^1$ is a $C_{1-10}$ hydrocarbon group, X is hydroxyl or an alkoxy, alkenoxy, acetoxy or ketoxime group having 1 - 6 carbon atoms, and a and b are positive numbers : $0 < a < 2$, $0 < b < 3$, and $0 < a + b < 4$, (C) a condensation catalyst, and optionally (D) an organosilane of the formula : $R^1_cSiY_{4-c}$ wherein $R^1$ is as defined above, Y is an alkoxy, alkenoxy, acetoxy or ketoxime group having 1 - 6 carbon atoms, and c is equal to 0, 1 or 2. The composition can firmly adhere to various inorganic substrates, especially stainless steel and form a coating having improved resistance to weather, water, stains and alkalis.

EP 0 656 409 A2

This specification relates to coating compositions which can firmly adhere to inorganic substrates, especially stainless steel strips, and form a coating having good resistance to weather, water, stains and alkalis. The coating composition is useful as a building exterior paint vehicle and a coating agent which can be applied to metals without primers.

Prior Art

Several weather resistant coating compositions are known as a substitute for acrylic lacquer. One composition is based on vinyl polymers containing a hydrolyzable silyl group as disclosed in Japanese Patent Application Kokai (JP-A) Nos. 129405/1980 and 3610/1982. These polymers are sensitive to moisture in air and crosslink at room temperature to form films which are improved in solvent and water resistance over the acrylic lacquer. However, these coating compositions are not satisfactory in weather resistance in that they do not cure in a low humidity environment, for example, in winter. In such a situation, curing cannot be promoted even by heating.

Also it now becomes a serious problem that coatings of acrylic lacquer are stained with acid rain. An improvement is thus made in acrylic-melamine paint. JP-A 108049/1988, for example, discloses to add a metal chelate to a vinyl polymer obtained by copolymerizing a (meth)acrylate containing an alkoxysilyl-terminated diorganopolysiloxane and a (meth)acrylate containing an oxirane. Coatings of this composition are improved in acid resistance, but insufficient in weather resistance. Also JP-A 221123/1988 discloses a composition wherein a metal chelate is added to an acrylic copolymer containing an epoxy group, a hydrolyzable silyl group and a siloxane moiety for improving low-temperature curing property. This composition, however, is low in adhesion between its coating and the underlying substrate of stainless steel or the like. The composition is applicable only to a limited type of material.

For the purpose of improving the weather resistance of coatings, JP-A 252414/1991 proposes a composition comprising a vinyl polymer containing a hydrolyzable silyl group, a silanol-terminated organopolysiloxane, and a dealcoholysis catalyst. Undesirably coatings of this composition are also low in adhesion to stainless steel or the like.

With respect to resin compositions for exterior paint having the best weather resistance, there are widely used fluoro-resin compositions wherein a copolymer of a fluoro-olefin and a hydroxyl-containing vinyl ether is cured with a melamine resin or polyisocyanate. Since coatings resulting from fluoro-resin compositions are soft as compared with coatings of acrylic resin compositions, the fluoro-resin coatings have problems that they are readily flawed by sand dust and stained. Additionally they are expensive.

Our general aim is to provide new and useful coating compositions and methods of making and using them, particularly with a view to getting good adhesion on inorganic substrates such as stainless steel strips, and preferably forming coatings having improved resistance to weather, water, stains and alkalis.

In one aspect there is provided a coating composition comprising, in admixture,

(A) a vinyl copolymer containing a hydroxyl group and a hydrolyzable silyl group,

(B) an organopolysiloxane of the following general formula (1):

$$R^1_aX_bSiO_{(4-a-b)/2} \qquad (1)$$

wherein $R^1$ are substituted or unsubstituted hydrocarbon groupshaving 1 to 10 carbon atoms, X is a hydroxyl group or an alkoxy, alkenoxy, acetoxy or ketoxime group having 1 to 6 carbon atoms, and letters a and b are positive numbers satisfying $0 < a < 2$, $0 < b < 3$, and $0 < a + b < 4$,

(C) a condensation catalyst, and optionally

(D) an organosilane of the following general formula (2):

$$R^1_cSiY_{4-c} \qquad (2)$$

wherein $R^1$ is as defined above, Y is an alkoxy, alkenoxy, acetoxy or ketoxime group having 1 to 6 carbon atoms, and letter c is equal to 0, 1 or

In our work, we find that such compositions are firmly bondable to various inorganic substrates, for example, mortar concrete, steel strips and stainless steel strips, and may form a coating having improved resistance to weather, water, stains and alkalis. The compositions can be useful as a building exterior paint vehicle and a coating agent which can be applied to metals without primers. More particularly, since the acrylic resin containing a hydroxyl group and a hydrolyzable silyl group and the siloxane are cured, there is formed a coating which is resistant to weather and heat and firmly adheres to various inorganic substrates. Owing to its high crosslinking density, the coating is less susceptible to staining, that is, stain resistant. By adjusting the amount of a curing catalyst, the composition can be given a wide curable range covering from room temperature curing to heat curing.

FURTHER EXPLANATIONS;

PREFERRED AND OPTIONAL FEATURES

As mentioned above, the coating composition comprises (A) a hydrolyzable silyl group, (B) an organopolysiloxane of formula (1), (C) a condensation catalyst, and optionally (D) an organosilane of formula (2).

Component (A) is a vinyl copolymer containing a hydroxyl group and a hydrolyzable silyl group. It may be obtained e.g. by copolymerizing a compound having a hydroxyl group and a polymerizable double bond, a compound having a hydrolysable silyl group and a polymerizable double bond, and optionally one or more other polymerizable compounds. Preferred is a copolymer obtained by radical polymerization of compounds of the following general formulae (3) and (4).

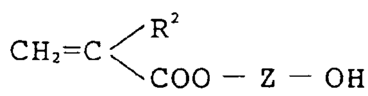

. . . (3)

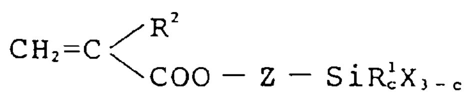

. . . (4)

In the formulae, $R^1$ are substituted or unsubstituted hydrocarbon groups having 1 to 10 carbon atoms, preferably 1 to 7 carbon atoms, for example, alkyl groups such as methyl, ethyl, propyl, butyl and hexyl groups; cycloalkyl groups such as cyclohexyl; alkenyl groups such as vinyl and allyl groups; aryl groups such as phenyl and tolyl groups; and substituted ones of these groups e.g. wherein some or all of the hydrogen atoms are replaced by halogen atoms, cyano groups or the like. Examples are chloromethyl, trifluoropropyl and cyanoethyl groups. The skilled person can easily select from the range of possible substituents, whose effects are generally well known. $R^2$ is a hydrogen atom or a methyl group.

Z is a divalent organic group having 2 to 20 carbon atoms, preferably 3 to 7 carbon atoms, An oxygen atom may be interposed in the organic group. Examples of Z are alkylene groups e.g with one or more interposed oxygen atoms, e.g. $(CH_2)_3$-, $-(CH_2)_4$-, $-(CH_2)_2$-O-$(CH_2)_3$- , $-(CH_2)_6$- , and $-(CH_2CH_2O)_2$-$(CH_2)_3$-. Letter c is equal to 0, 1 or 2.

Examples of the compound of formula (3) include 2-hydroxyethyl (meth)acrylate, 2-hydroxypropyl (meth)acrylate, 2-hydroxybutyl (meth)acrylate, 2-hydroxyethoxyethyl (meth)acrylate, and N-methylolacrylamide. Examples of the compound of formula (4) include 3-methoxysilylpropyl (meth)acrylate, 3-triethoxysilylpropyl (meth)acrylate, 3-dimethoxymethylsilylpropyl (meth)acrylate, and 3-diethoxymethylsilylpropyl (meth)acrylate.

The other compounds which can be copolymerized with the compounds of formulae (3) and (4) include carboxylic acids such as (meth)acrylic acid, maleic acid, maleic anhydride, and itaconic acid; acrylates and methacrylates such as methyl (meth)acrylate, ethyl (meth)acrylate, and butyl (meth)acrylate; and functional group-containing acrylates and methacrylates such as glycidyl (meth)acrylate and diethylaminoethyl (meth)acrylate. Also useful are such polymerizable monomers as vinyl acetate, 2-hydroxyvinyl ether, styrene, and $\alpha$-methylstyrene.

The monomers may be vinyl monomers represented by the following formula:

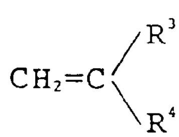

wherein $R^3$ is hydrogen atom or methyl group and $R^4$ is hydrogen atom, chlorine atom, $-OCOCH_3$, -COOH, $-COOR^5$ ($R^5$ is alkyl group), alkyloxy group or phenyl group.

A copolymer for component (A) may be prepared by effecting radical polymerization of the compounds of formulae (3) and (4) e.g. by a well-known procedure. A polymerization initiator is generally used. Exemplary initiators are azobis compounds such as azobisisobutyronitrile and azobis(2,4-dimethylvaleronitrile) and peroxides such as benzoyl peroxide and laurdyl peroxide.

The relative amounts of the compounds of formulae (3) and (4) used are not particularly limited. Preferably

these compounds are used in such amounts that at least two hydrolyzable silyl groups and at least two hydroxyl groups may be introduced into a molecule of the copolymer. More preferably the copolymer contains 5 to 50% by weight of the compound of formula (3) and 3 to 30% by weight of the compound of formula (4). The residue is the other polymerizable compound.

Polymerization reaction can be carried out in a solvent system. For ease of subsequent coating, polymerization is preferably carried out in ether, ester, hydrocarbon and alcohol solvents alone or in admixture of two or more. If necessary, a chain transfer agent is added to the reaction system for adjusting the molecular weight of a copolymer. Exemplary chain transfer agents are n-dodecylmercaptan, t-dodecylmercaptan, and 3-mercaptopropyltrimethoxysilane.

As mentioned above, the copolymer of component (A) is characterized by containing a hydroxyl group and a hydrolyzable silyl group. If component (A) is an acrylic resin containing only a hydroxyl group, the resulting coating is less resistant to water because component (A) crosslinks with component (B) through a Si-O-C linkage. If component (A) is an acrylic resin containing only a hydrolyzable silyl group, it is not fully curable with component (B), failing to achieve a high crosslinking density. If the content of hydrolyzable silyl group is increased for the purpose of increasing the crosslinking density, then storage stability is lost. It is then necessary to introduce an appropriate amount of hydroxyl group as well, that is, to contain both a hydroxyl group and a hydrolyzable silyl group.

Component (B) is an organopolysiloxane of the following general formula (1).

$$R^1_aX_bSiO_{(4-a-b)/2} \qquad (1)$$

$R^1$ is as defined above. X is a hydroxyl group or an alkoxy group, alkenoxy group, acetoxy group or ketoxime group usually of 1 to 6 carbon atoms. Exemplary groups of X are silanol, methoxy, ethoxy, isopropenyloxy and methyl ethyl ketoxime groups. Differently stated, X may be any functional group capable of curing in the presence of a curing catalyst as component (C). Silanol and methoxy groups are preferred from an industrial aspect. Phenyl is a preferred $R^1$ group from the standpoint of compatibility with component (A). Letters a and b are positive numbers satisfying $0 < a < 2$, $0 < b < 3$, and $0 < a + b < 4$.

Organopolysiloxane for component (B) may be prepared by hydrolyzing alkylchlorosilanes, phenylchlorosilanes, alkylalkoxysilanes, phenylalkoxysilanes or the like.

Examples of the organopolysiloxane (B) include hydrolyzates or partial hydrolyzates of chlorosilanes such as tetrachlorosilane, methyltrichlorosilane, dimethyldichlorosilane, phenyltrichlorosilane, diphenyltrichlorosilane, phenylmethyldichlorosilane, trifluoropropyltrichlorosilane, and trifluoropropylmethyldichlorosilane; and alkoxysilanes such as methyltrimethoxysilane, methyltriethoxysilane, tetramethoxysilane, tetraethoxysilane, phenyltrimethoxysilane, phenyltriethoxysilane, dimethyldimethoxysilane, dimethyldiethoxysilane, diphenyldimethoxysilane, diphenyldiethoxysilane, phenylmethyldimethoxysilane, and phenylmethyldiethoxysilane.

Component (B) is preferably blended in an amount of about 10 to about 300 parts, more preferably about 50 to about 200 parts by weight per 100 parts by weight of component (A). Less than 10 parts of component (B) on this basis would provide less weather resistance whereas more than 300 parts of component (B) would fail to provide satisfactory surface hardness.

Component (C) is a condensation catalyst which is not particularly limited insofar as it can assist in condensation between the hydroxyl and hydrolyzable silyl groups of component (A) and the functional group of component (B). Exemplary catalysts include alkoxyaluminum compounds, aluminum chelates, alkyl titanates, tin octylate, dibutyltin dicarboxylates, alkali metal salts of carboxylic acids, alkaline earth metal salts of carboxylic acids, organic amines, carboxylic acid neutralized salts of organic amines, quaternary ammonium salts, N-β-aminoethyl-γ-aminopropyltrimethoxysilane, γ-aminopropyltriethoxysilane, and organic acids such as p-toluenesulfonic acid and phthalic acid. Among these catalysts, aluminum chelates are especially useful since they are effective for promoting condensation. Exemplary aluminum chelates are given below.

$A\ell(acac)_3$, $A\ell(O{-}i{-}Pr)(acac)_2$, $A\ell(O{-}i{-}Pr)_2(acac)$,

$A\ell(O{-}i{-}Bu)(acac)_2$, $A\ell(O{-}i{-}Bu)_2(acac)$, 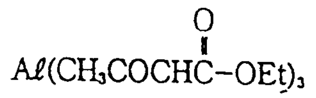,

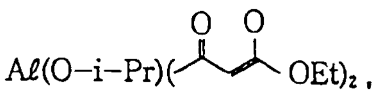, 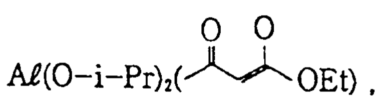,

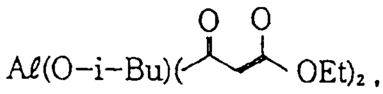, 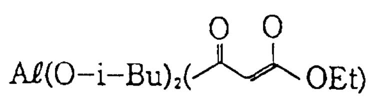

acac : acetylacetonato
Pr : propyl
Bu : butyl
Et : ethyl

Component (C) is preferably added in an amount of about 0.01 to about 40 parts by weight per 100 parts by weight of component (A). Less than 0.01 part of component (C) on this basis would be too small to promote curing whereas more than 40 parts of component (C) would detract from weather resistance and result in a coating composition with a short pot life.

For the purpose of improving surface hardness and curability, organosilane of the following general formula (2) may be included in the coating composition as a crosslinking agent (D).

$$R^1_cSiY_{4-c} \quad (2)$$

$R^1$ and c are as defined above. Y is an alkoxy group, alkenoxy group, acetoxy group or ketoxime group, usually of 1 to 6 carbon atoms.

Examples of the organosilane of formula (2) include tetramethoxysilane, tetraethoxysilane, tetraisopropenoxysilane, tetrakis(methylethylketoxime)silane, methyltris(methylethylketoxime)silane, methyltriisopropenoxysilane, methyltriacetoxysilane, dimethyldimethoxysilane, dimethyl-bis(methylethylketoxime)silane, dimethyldiisopropenoxysilane, dimethyldiacetoxysilane, vinyltris(methylethylketoxime)silane, and phenyltriisopropenoxysilane.

Preferably component (D) is added in an amount of up to about 100 parts by weight per 100 parts by weight of component (A). Addition of more than 100 parts of component (D) would encounter difficulty in improving surface hardness and be disadvantageous in economy.

The coating compositions may be prepared in a well-known manner.

For ease of handling, the composition is preferably diluted with various organic solvents. The organic solvent used herein is selected in terms of the type of copolymer (A) and the type and molecular weight of organopolysiloxane (B). Exemplary solvents include aromatic hydrocarbons such as toluene and xylene; ketones such as acetone, methyl ethyl ketone, and methyl isobutyl ketone; aliphatic hydrocarbons such as hexane, octane, and heptane; chlorinated organic solvents such as chloroform, methylene chloride, trichloroethylene and carbon tetrachloride; alcohols such as methanol, ethanol, isopropanol, butanol and isobutanol; and esters such as ethyl acetate, butyl acetate and isobutyl acetate, alone or in admixture of two or more. Preferably 100 parts by weight of the coating composition is diluted with about 50 to about 300 parts by weight of the organic solvent.

If desired, the coating composition may further contain any desired additive such as leveling agents, thickeners and UV absorbers. Also coloring agents such as pigments and dyes, aluminum paste, talc, glass frit, metal powder, etc. may be added to the coating composition so that the composition is used as paint to form a coating on a substrate.

The coating composition can be applied to substrates by any desired methods to form coating films. Exemplary coating methods are brush coating, spraying, dipping, flow coating, knife coating, and spin coating. The composition can be applied in situ.

Preferably the coating composition is applied to form a coating which is about 5 to 50 μm thick. Where the coating composition is used as paint with pigments added thereto, the coating should preferably be about 10 to about 100 μm thick.

The coating composition may be applied to various substrates of metals, mortar, slate, concrete, wood, plastics, and glass. It may also be used for overcoating a coated film of acrylic, alkyd, polyester, epoxy or urethane base paint. Compositions can be made to firmly adhere to stainless steel strips and concrete.

## EXAMPLE

Examples of the present proposals are given below by way of illustration and not by way of limitation. All parts are by weight.

Preparation of component (A) is first described.

### Preparation Example 1

To a flask charged with 100 parts of toluene at 90°C, a mixture of 80 parts of methyl methacrylate, 15 parts of 2-hydroxyethyl methacrylate, 5 parts of 3-methacryloxypropyltrimethoxysilane, and 1 part of azobisisobutyronitrile was added dropwise over 4 hours in a nitrogen stream. The reaction mixture was aged for 2 hours at 90°C, obtaining a toluene solution of a copolymer having an average molecular weight of about 30,000 as measured on a polystyrene basis (solids content 50%).

### Preparation Example 2

The procedure of Preparation Example 1 was repeated except that 20 parts of 2-hydroxyethyl methacrylate was used and the 3-methacryloxypropyltrimethoxysilane was omitted. There was obtained a toluene solution of a copolymer having an average molecular weight of about 40,000 (solids content 50%).

### Preparation Example 3

The procedure of Preparation Example 1 was repeated except that 10 parts of butyl methacrylate and 10 parts of 3-methacryloxypropyltrimethoxysilane were used instead of 15 parts of 2-hydroxyethyl methacrylate and 5 parts of 3-methacryloxypropyltrimethoxysilane. There was obtained a toluene solution of a copolymer having an average molecular weight of about 35,000 (solids content 50%).

### Example 1

To a mixture of 50 parts as solids of the copolymer in toluene solution obtained in Preparation Example 1 (that is, 100 parts of the toluene solution), 50 parts of a silanol-terminated organopolysiloxane represented by $(CH_3)_{1.0}(C_6H_5)_{0.6}(OH)_{0.32}SiO_{1.04}$ and having an average molecular weight of about 3,000, 30 parts of xylene, and 20 parts of isobutanol was added 0.5 part of trisacetylacetonatoaluminum. The ingredients were thoroughly mixed. The resulting composition was applied to a stainless steel (SUS 304) strip of 0.3 mm gage by means of a bar coater No. 28 and cured by heating at 150 °C for 30 minutes. There was obtained a cured coating having a dry thickness of about 20 µm.

### Example 2

A coating composition was prepare by the same procedure as in Example 1 except that 5 parts of a compound of the following formula (5) was further added. As in Example 1, a cured coating having a dry thickness of about 20 µm was obtained.

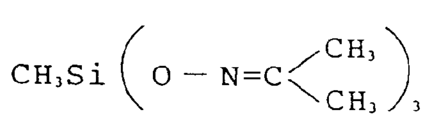

... (5)

### Example 3

To a mixture of 50 parts as solids of the copolymer in toluene solution obtained in Preparation Example 1 (that is, 100 parts of the toluene solution), 50 parts of a methoxy-terminated organopolysiloxane represented by $(CH_3)_{0.7}(C_6H_5)_{1.0}(CH_3O)_{0.8}SiO_{0.75}$ and having an average molecular weight of about 800, 30 parts of xylene, and 20 parts of cyclohexanone was added 2 parts of trisacetylacetonatoaluminum. The ingredients were thoroughly mixed. The resulting composition was applied to a stainless steel (SUS 304) strip of 0.3 mm gage by means of a bar coater No. 28 and cured by allowing to stand at room temperature for one week. There was

obtained a cured coating having a dry thickness of about 15 μm.

Comparative Example 1

A coating composition was prepared by thoroughly mixing 50 parts as solids of the copolymer in toluene solution obtained in Preparation Example 2 (that is, 100 parts of the toluene solution), 50 parts of a silanol-terminated organopolysiloxane represented by $(CH_3)_{1.0}(C_6H_5)_{0.6}(OH)_{0.32}SiO_{1.04}$ and having an average molecular weight of about 3,000, and 50 parts of xylene. The composition was applied to a stainless steel strip and heat cured, obtaining a cured coating as in Example 1.

Comparative Example 2

By repeating the procedure of Example 3 except that the copolymer in toluene solution obtained in Preparation Example 3 was used, a cured coating having a dry thickness of about 20 μm was obtained.

The coatings were measured for physical properties by the following methods.

Pencil hardness

It was measured according to JIS K-5400, Item 6-14.

Cross hatch adhesion test

A cross hatch adhesion tape test was done according to JIS K-5400, Item 6-15.

Mandrel test

According to JIS K-5400, Item 6-16, a coated sample was bent about a mandrel having a diameter of 2 mm. The outer appearance was visually observed and rated according to the following criterion.

○: intact
×: fine cracks

Xylene rubbing

A coated sample was rubbed 100 reciprocal cycles with 1 cm × 1 cm cotton wadding impregnated with xylene. The outer appearance was visually observed and rated according to the following criterion.

○: good
×: roughened surface

Resistance to boiling water

A coated sample was dipped in pure water which was boiled for 2 hours. Thereafter, the sample was subject to a cross hatch adhesion tape test.

Staining with oil ink

A cured coating was marked with black oil ink (using a Magic Ink pen by Pentel K.K.) and air dried for 10 minutes. The marked coating surface was wiped with cotton wadding impregnated with isopropyl alcohol. The surface was visually observed and rated according to the following criterion.

○: no residual marks
×: residual marks

Weather resistance

Using Atlas Uvcon (manufactured by Toyo Seiki Mfg. K.K.), a duty cycle test was carried out for 1,000 hours, which cycle included UV exposure at 70°C for 8 hours and humid exposure at 50°C for 4 hours. The sample was subject to a cross hatch adhesion tape test. Also the outer appearance of the coating was visually observed.

The results are shown in Table 1.

Table 1

| | | Example | | | Comparative Example | |
|---|---|---|---|---|---|---|
| | | 1 | 2 | 3 | 1 | 2 |
| Pencil hardness | | 2H | 3H | 2H | 2H | 2H |
| Adhesion tape test | | 100/100 | 100/100 | 100/100 | 100/100 | 100/100 |
| Mandrel test | | ○ | ○ | ○ | × | × |
| Xylene rubbing | | ○ | ○ | ○ | × | × |
| Boiling water resistance (adhesion tape test) | | 100/100 | 100/100 | 100/100 | 0/100 | 90/100 |
| Oil ink staining | | ○ | ○ | ○ | × | × |
| Weather resistance | Adhesion tape test | 100/100 | 100/100 | 100/100 | 50/100 | 90/100 |
| | Outer appearance | intact | intact | intact | intact | intact |

Thus, we have disclosed coating compositions which can firmly adhere to various inorganic substrates, especially stainless steel strips and form a coating having good resistance to weather, water, stains and alkalis. They may find use e.g. as a vehicle of building exterior paint and a coating agent which can be applied to metals without primers.

Japanese Patent Application No. 5-323451 is incorporated herein by reference.

Although some specific embodiments have been described, modifications and variations may be made thereto within the general teachings above.

It is therefore to be understood that within the scope of the appended claims, the invention may be practiced otherwise than as specifically described.

## Claims

1. A coating composition comprising, in admixture,
   (A) vinyl copolymer containing a hydroxyl group and a hydrolysable silyl group,
   (B) organopolysiloxane of the following general formula (1):
   $$R^1_aX_bSiO_{(4-a-b)/2} \quad (1)$$
   wherein $R^1$ are substituted or unsubstituted hydrocarbon groups having 1 to 10 carbon atoms, X are functional groups curable by condensation reaction with the hydroxyl and hydrolysable silyl groups of vinyl copolymer (A), and a and b are positive numbers satisfying $0 < a < 2$, $0 < b < 3$, and $0 < a + b < 4$, and
   (C) condensation catalyst.

2. A coating composition according to claim 1 in which groups X are selected from hydroxyl, alkoxy, alkenoxy, acetoxy and ketoxime.

3. A coating composition of claim 1 or claim 2 which comprises
   (D) organosilane of the following general formula (2):
   $$R^1_cSiY_{4-c} \quad (2)$$
   wherein $R^1$ is as defined above, Y is selected from the group consisting of an alkoxy group, alkenoxy group, acetoxy group and ketoxime group each having 1 to 6 carbon atoms, and letter c is equal to 0, 1 or 2.

4. A coating composition of any preceding claim wherein component (A) is obtained by copolymerising polymerisable monomers of the following general formulae (3) and (4) and optionally one or more other polymerisable compounds:

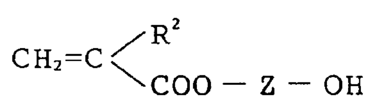

. . . (3)

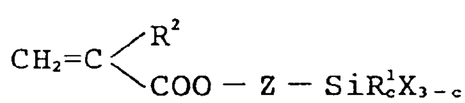

. . . (4)

   wherein $R^1$, X, and c are as defined above, $R^2$ is a hydrogen atom or a methyl group, and Z is a divalent organic group having 2 to 20 carbon atoms which may have an oxygen atom interposed therein.

5. A coating composition of any preceding claim wherein component (C) is an aluminium chelate.

6. A coating composition of claim 4 wherein the copolymer contains 5 to 50% by weight of the compound of formula (3) and 3 to 30% by weight of the compound of formula (4).

7. Use, for coating, of a composition according to any one of claims 1 to 5.

8. A method comprising the preparation of a coating composition according to any one of claims 1 to 5.